# EUROPEAN PATENT SPECIFICATION

(11) **EP 1 038 563 B1**
(45) Date of publication and mention of the grant of the patent: **10.12.2003**
(21) Application number: 00106236.3
(22) Date of filing: 22.03.2000
(51) Int. Cl.: B01D 17/025, B01D 17/032, E03F 5/16

(54) **Device for separating water from oil or grease**
Vorrichtung zur Abtrennung von Wasser aus Öl oder Fett
Dispositif de séparation d'eau, d'huile ou graisse

(30) Priority: 23.03.1999 IT PS990011 U
(43) Date of publication of application: 27.09.2000
(73) Proprietor: Magi, Bruno, 61020 Montecchio di S. Angelo in Lizzola (PS) (IT)
(72) Inventor: Magi, Bruno, 61020 Montecchio di S. Angelo in Lizzola (PS) (IT)
(74) Representative: Negrini, Elena

(56) References cited:
- EP-A- 0 350 906
- EP-A- 0 445 576
- EP-A- 0 544 059
- WO-A-86/05535
- CH-A- 542 154
- GB-A- 848 977
- US-A- 2 904 180
- US-A- 4 072 614
- US-A- 5 718 015

## Description

The present invention refers to devices to separate a mixture of liquids, particularly concerns a device for separating water from oil or grease to be wasted.

It is known that the exhaust oil to be recycled must be separated from water and from sludge. Currently this operation is performed in large settling tanks and needs very long times. Besides the tanks are very bulky and are often located outside, so that in case of strong rains these tanks suffers water infiltration.

Document EP 445 576 discloses a device for separating water from oil or grease of a mixture including an external container for said mixture, a plurality of communicating vessels, one inside the other, making vertical labyrinth runs for said water discharged from the external container through an outlet duct 7 taking water from the bottom of the innermost communicating vessels; an outlet duct for withdrawing oil-grease from said external container and which incoming end is inside the upper layer of oil. Said plurality of communicating vessels includes a middle container inside the external container and at least an inner container having said outlet duct connected thereto. The device includes a lower passage between said middle container and said external container near to the bottom of this latter and it includes an upper hole between the middle container and the inner container next to the top of the latter.

The main object of the invention is to carry out a quite instant separation of the elements of the liquid mixture by means of a small and easy maintenance device.

The device of the present invention is constituted by a container in which coaxial communicating vessels are inserted carrying out labyrinth shaped vertical runs for water that is separated by the mixture introduced from the top, before it is evacuated through an outlet duct.

The remaining oil is withdrawn by means of a second outlet duct, placed at an upper height of the outlet water duct, that is fixed or variable due to a float. A filter facilitates the separation of the mixture elements.

The invention is now described in detail referring to the attached drawing sheets in witch:
- figure 1 shows a vertical median section view of the device;
- figure 2 shows a top view of the device along the horizontal plane A-A of figure 1;
- figure 3 shows a vertical section view of a variant of the device of figure 1.

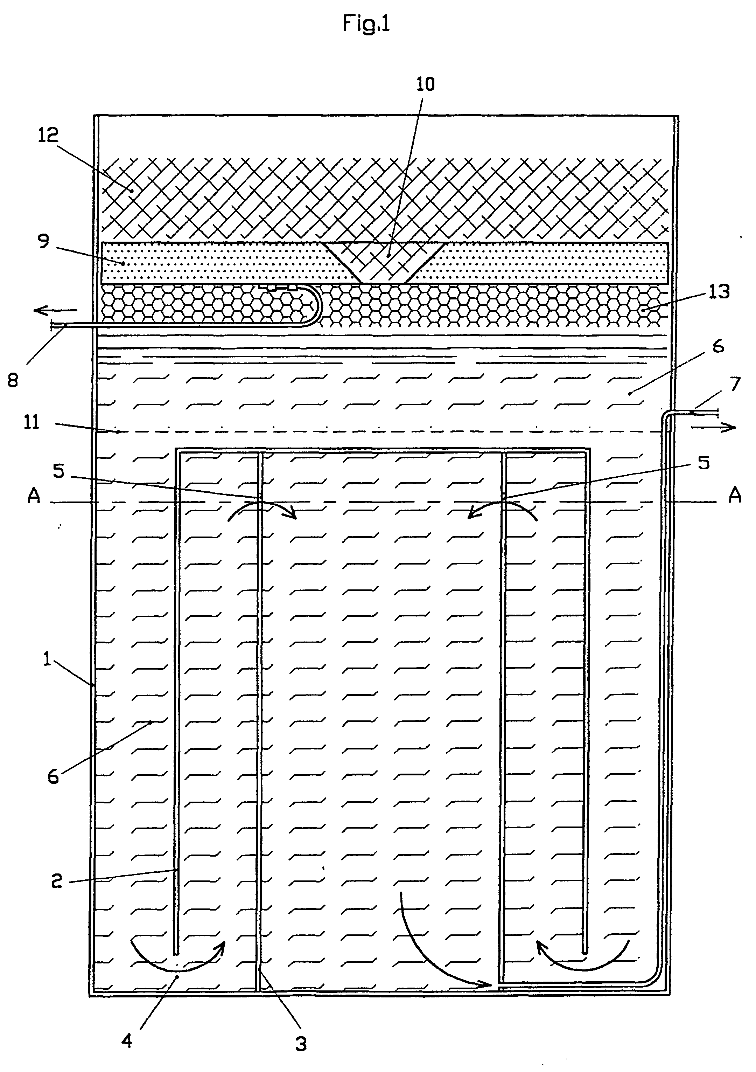

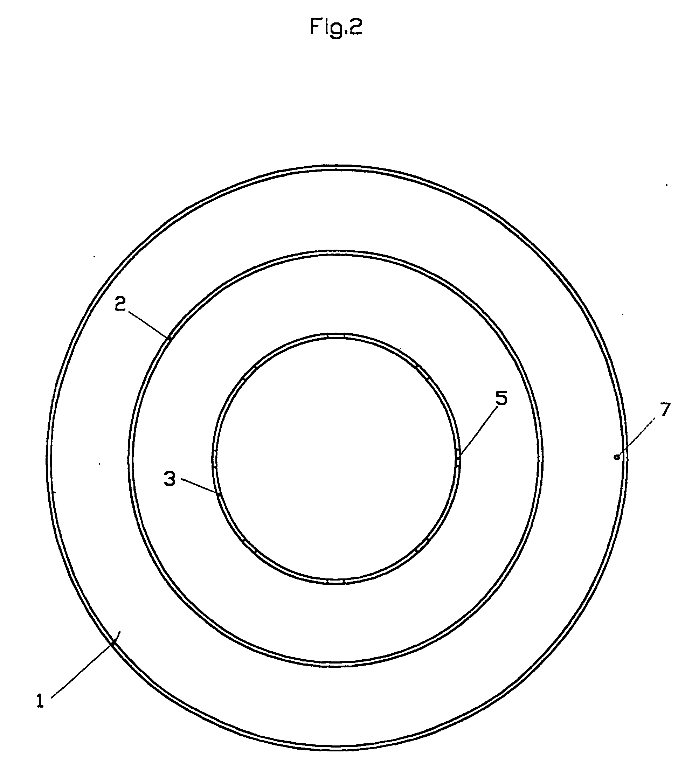

In figures 1 and 2, the device fit for separating water from oil or grease includes an external container 1, a middle container 2 and an inner container 3. Said coaxial containers are a sort of "communicating vessels" in flow communication so as to make vertical labyrinth runs.

For this purpose, a lower passage 4 is carried out in the middle container 2 near to the external container bottom, while the internal container 3 is provided near the top with upper holes 5, for instance eight as shown in figure 2.

The numeral 6 indicates water, that is preventively poured into the coaxial communicating vessels and that subsequently flows, because of gravity, from the top, separating itself from the oil.

An outlet duct 7 of the water separated by the oil has an end in flow communication close to the inner container bottom and the remaining free end comes out from the external container 1 at a higher level with respect to the upper holes 5.

Numeral 8 indicates the outlet duct of the oil and/or grease, fixed to a float 9 that is vertically movable, inside the external container 1. The free end of the outlet oil duct 8 comes out from the external container 1 at a higher level with respect to the free end of the outlet water duct 7. The outlet duct 8 could be fixed at an height greater than the outlet water duct 7.

The float 9 has one or more passing holes 10 of the water-oil/grease mixture 12.

A net filter 11 is horizontally laying inside the external container 1 so facilitating the separation of the mixture elements.

A variant of the device provides that the filter 11 is directly joined to the float 9.

The water-oil mixture 12 poured from the top inside the external container 1, because of the resistance offered by the column of lower water, before introduced into the labyrinth run of the communicating vessels, and also because of the filtering action of the net filter 11, separate itself quickly in an upper oil layer 13 and in a lower water layer 6. The water flows out through the labyrinth run and the outlet duct 7, while the oil, withdrawn from the layer 13, is evacuated through the duct 8.

The filter 11 helps to prevent the oil passage toward the containers bottom, by virtue of the oil viscosity.

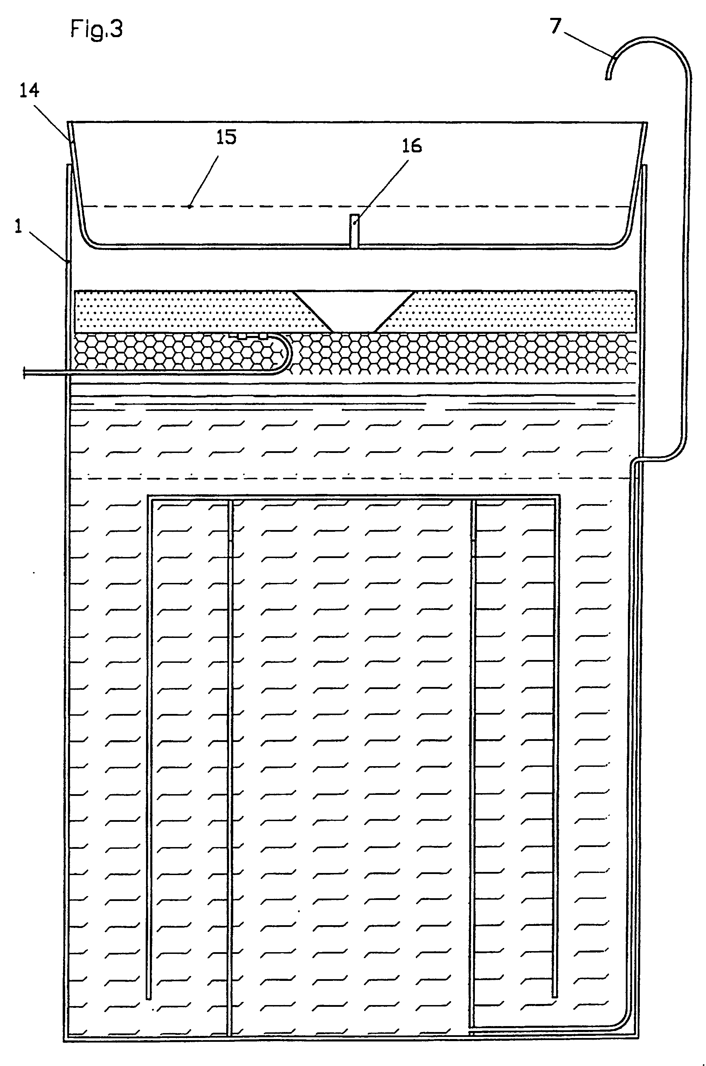

Figure 3 shows a variant of the device in which an accessory tank 14, provided onto the external container opening, is provided with a net 15 and with a passthrough duct 16, that withdraws at such a height to overhang a sludge layer.

The net 15 supports oiled and/or greased objects, such as rags that can by washed with water flowing from the same outlet water duct 7, properly lifted as in figure 3. Water, oil and grease drop because of the washing, are introduced into the device through the duct 16 and therefore separated by the device according to the invention.

The device according to said variant is fit for degreasing tableware or similar objects, for instance with or without detergent addition.

Another device variant shown in figure 3 provides that an end of a pipe comes into the inner container 3, near to its top, while the other free end comes out from the external container 1. This pipe evacuates the exceeding air, or introduces air, so obtaining a dampening effect and increasing the oxygen in the water.

From experimental tests results that the separation of water from the oil is nearly instantaneous. The device is besides particularly compact and, if realized with suitable sizes, it can also be transportable.

## Claims

1. Device for separating water (6) from oil or grease of a mixture (12) including:
- an external container (1) for said mixture (12);
- a plurality of communicating vessels (2, 3), one inside the other, making vertical labyrinth runs for said water (6) discharged from the external container (1) through an outlet duct (7) taking water from the bottom of the innermost communicating vessels (2, 3);
- an outlet duct (8) for withdrawing oil-grease from said external container (1) and which incoming end is inside the upper of mixture (12);
said plurality of communicating vessels (2, 3) includes:
- a middle container (2) inside the external container (1) and at least an inner container (3), having said outlet duct (7) connected thereto;
- at least a lower passage (4) between said middle container (2) and said external container (1) near to the bottom of this latter;
- at least an upper hole (5) between the middle container (2) and the inner container (3) next to the top of the latter;
the device (1) being **characterized in that** an end of a pipe is inside the inner container (3), close to its top, and the other end comes out from the external container (1) for evacuating the exceeding air, or for introducing air, so obtaining a dampening effect and increasing the oxygen in the water.

2. Device according to claim 1 **characterized in that** the exit ends of said outlet ducts (7, 8) exit from the external container (1) between the tops of the communicating vessels (2, 3) and the upper oil-grease layer (13).

3. Device according to claim 2 **characterized in that** the outer water duct end (7) is lower than the outer oil-grease duct end (8).

4. Device according to claim 1 **characterized in that** the input end of the oil-grease (8) is joined to the lower surface of a float (9) supported by the mixture (12).

5. Device according to claim 4 **characterized in that** the float (9) has at least a passing hole (10) of the mixture (12).

6. Device according to claim 1 **characterized in that** further includes a filter (11) displaced over the communicating vessels (2, 3) for avoiding the oil or grease fall onto the external container bottom.

7. Device according to claims 4 and 6 **characterized in that** said filter (11) is joined to the float (9).

8. Device according to claim 1 **characterized in that** a tank (14) is put at the external container top, said tank (14) having a net (15) supporting oiled objects and a duct (16) passing into the external container (1).

9. Device according to claim 8 **characterized in that** the free end of the outlet duct (7) feeds the water (6) into the tank (14) from the top.

10. Device according to claim 8 **characterized in that** the duct (16) has the free end protruding from the tank bottom.

## Patentansprüche

1. Vorrichtung zum Abtrennen von Wasser (6) aus dem Öl oder Fett eines Gemischs (12), umfassend:
- einen äußeren Behälter (1) für das Gemisch (12);
- eine Anzahl kommunizierender Gefäße (2, 3), eins im andern, welche vertikale Labyrinthgänge für das Wasser (6) bilden, das vom äußeren Behälter (1) durch eine Auslassleitung (7) abfließt, welche Wasser vom unteren Ende der innersten der kommunizierenden Gefäße (2, 3) aufnimmt;
- eine Auslassleitung (8) zum Entnehmen von Öl-Fett aus dem externen Behälter (1), dessen Eingangsende sich in der oberen des Gemischs (12) befindet;
wobei die Anzahl kommunizierender Gefäße (2, 3) umfasst:
- einen mittleren Behälter (2) in dem äußeren Behälter (1) und wenigstens einen inneren Behälter (3), mit dem die Auslassleitung (7) verbunden ist;
- wenigstens einen unteren Durchlass (4) zwischen dem mittleren Behälter (2) und dem äußeren Behälter (1) in der Nähe des Bodens des letzteren;
- wenigstens ein oberes Loch (5) zwischen dem mittleren Behälter (2) und dem inneren Behälter (3) nächst dem oberen Ende des letzteren;
wobei die Vorrichtung **dadurch gekennzeichnet ist, dass** sich ein Ende eines Rohres im inneren Behälter (3), in der Nähe seines oberen Endes, befindet und das andere Ende vom äußeren Behälter (1) austritt, um die überschüssige Luft abzuführen oder um Luft einzuführen, so dass ein Dämpfungseffekt entsteht und der Sauerstoff im Wasser vermehrt wird.

2. Vorrichtung nach Anspruch 1, **dadurch gekennzeichnet, dass** die Austrittsenden der Auslassleitungen (7, 8) aus dem äußeren Behälter (1) zwischen den oberen Enden der kommunizierenden Gefäße (2, 3) und der oberen Öl-Fettschicht (13) austreten.

3. Vorrichtung nach Anspruch 2, **dadurch gekennzeichnet, dass** das äußere Ende der Wasserleitung (7) niedriger liegt als das äußere Ende der Öl-Fett-Leitung (8)

4. Vorrichtung nach Anspruch (1), **dadurch gekennzeichnet, dass** das Eingangsende der Öl-Fett-Leitung (8) mit der Unterseite eines Schwimmers (9) verbunden ist, der von dem Gemisch (12) getragen wird.

5. Vorrichtung nach Anspruch 4, **dadurch gekennzeichnet, dass** der Schwimmer (9) wenigstens ein Durchlassloch (10) des Gemischs (12) aufweist.

6. Vorrichtung nach Anspruch 1, **dadurch gekennzeichnet, dass** es weiterhin einen Filter (11) umfasst, der über den kommunizierenden Gefäßen (2, 3) angeordnet ist, um zu verhindern, dass Öl oder Fett auf den Boden des äußeren Behälters fällt.

7. Vorrichtung nach Anspruch 4 und 6, **dadurch gekennzeichnet, dass** der Filter (11) mit dem Schwimmer (9) verbunden ist.

8. Vorrichtung nach Anspruch 1, **dadurch gekennzeichnet, dass** ein Tank ans obere Ende des äußeren Behälters angesetzt ist, wobei der Tank (14) ein Netz (15) aufweist, welches ölige Objekte trägt, sowie eine Leitung (16), die in den äußeren Behälter (1) führt.

9. Vorrichtung nach Anspruch 8, **dadurch gekennzeichnet, dass** das freie Ende der Auslassleitung (7) von oben Wasser (6) in den Tank (14) speist.

10. Vorrichtung nach Anspruch 8, **dadurch gekennzeichnet, dass** das freie Ende der Leitung (16) vom Boden des Tanks vorragt.

## Revendications

1. Dispositif servant à séparer l'eau (6) de l'huile ou de la graisse d'un mélange (12), incluant :
- un conteneur externe (1) pour ledit mélange (12) ;
- une pluralité de cuves communicantes (2, 3), l'une à l'intérieur de l'autre, créant ainsi des passages verticaux en labyrinthe pour ladite eau (6) évacuée du conteneur externe (1) par un conduit de sortie (7) qui prend l'eau au fond de celle des cuves communicantes (2, 3) située le plus à l'intérieur ;
- un conduit de sortie (8) pour retirer l'huile/la graisse dudit conteneur externe (1) et dont l'extrémité d'entrée est située à l'intérieur de la couche supérieure du mélange (12) ;
Ladite pluralité de cuves communicantes (2, 3) inclut :
- un conteneur central (2) à l'intérieur du conteneur externe (1) et au moins un conteneur interne (3) auquel ledit conduit de sortie (7) est connecté ;
- au moins un passage inférieur (4) entre ledit conteneur central (2) et ledit conteneur externe (1) près du fond de cc dernier ;
- au moins un orifice supérieur (5) entre le conteneur central (2) et le conteneur interne (3) à côté du sommet de ce dernier ;
Le dispositif étant **caractérisé en ce qu'**une extrémité de tuyau se trouve dans le conteneur interne (3), près de son sommet, et l'autre extrémité sort du conteneur externe (1) pour évacuer l'air en excès, ou pour introduire de l'air, ce qui permet d'obtenir un effet d'humidification et d'augmenter la quantité d'oxygène dans l'eau.

2. Dispositif selon la revendication 1, **caractérisé en ce que** les extrémités de sortie desdits conduits de sortie (7, 8) sortent du conteneur externe (1) entre les sommets des cuves communicantes (2, 3) et la couche supérieure d'huile/graisse (13).

3. Dispositif selon la revendication 2, **caractérisé en ce que** l'extrémité du conduit d'eau externe (7) est inférieure à l'extrémité du conduit d'huile/graisse externe (8).

4. Dispositif selon la revendication 1, **caractérisé en ce que** l'extrémité d'entrée de l'huile/graisse (8) est jointe à la surface inférieure d'un flotteur (9) supporté par le mélange (12).

5. Dispositif selon la revendication 4, **caractérisé en ce que** le flotteur (9) possède au moins un orifice de passage (10) pour le mélange (12).

6. Dispositif selon la revendication 1, **caractérisé en ce qu'**il comprend en outre un filtre (11) situé au-dessus des cuves communicantes (2, 3) pour éviter que l'huile ou la graisse ne tombe au fond du conteneur externe.

7. Dispositif selon les revendications 4 et 6, **caractérisé en ce que** ledit filtre (11) est joint au flotteur (9).

8. Dispositif selon la revendication 1, **caractérisé en ce qu'**un réservoir (14) est placé au sommet du conteneur externe, ledit réservoir (14) possédant un filet (15) qui supporte les objets huileux et un conduit (16) qui passe dans le conteneur externe (1).

9. Dispositif selon la revendication 8, **caractérisé en ce que** l'extrémité libre du conduit de sortie (7) alimente le réservoir (14) en eau (6) par le sommet.

10. Dispositif selon la revendication 8, **caractérisé en ce que** ledit conduit (16) possède une extrémité libre qui ressort du fond du réservoir.
